**Europäisches Patentamt**

**European Patent Office**

**Office européen des brevets**

(19)

(11) Veröffentlichungsnummer : **0 338 347 B1**

(12)

# EUROPÄISCHE PATENTSCHRIFT

(45) Veröffentlichungstag der Patentschrift :
**26.02.92 Patentblatt 92/09**

(51) Int. Cl.$^5$ : **C09K 21/00**

(21) Anmeldenummer : **89106154.1**

(22) Anmeldetag : **07.04.89**

(54) **Latexgebundene Brandschutzmasse.**

Verbunden mit 89904068.7/0408627
(europäische
Anmeldenummer/Veröffentlichungsnummer)
durch Entscheidung vom 31.05.91.

(30) Priorität : **07.04.88 AT 889/88**

(43) Veröffentlichungstag der Anmeldung :
**25.10.89 Patentblatt 89/43**

(45) Bekanntmachung des Hinweises auf die
Patenterteilung :
**26.02.92 Patentblatt 92/09**

(84) Benannte Vertragsstaaten :
**AT BE CH DE ES FR GB GR IT LI LU NL SE**

(56) Entgegenhaltungen :
**WO-A-82/02019**
**FR-A- 2 265 832**

(73) Patentinhaber : **Chemie Linz Gesellschaft
m.b.H.
St.Peter-Strasse 25
A-4021 Linz (AT)**

(72) Erfinder : **Horacek, Heinz, Dr.
Bockgasse 43
A-4020 Linz (AT)**
Erfinder : **Wudy, Hermann
Preyssgasse 24
A-2511 Pfaffstätten (AT)**

(74) Vertreter : **Kunz, Ekkehard, Dr.
Chemie Holding AG Patentwesen St.
Peter-Strasse 25
A-4021 Linz (AT)**

EP 0 338 347 B1

## Beschreibung

Die Erfindung betrifft thermisch expandierbare Brandschutzmassen bzw. Brandschutzlaminate, die Blähgraphit, einen Carboxylgruppen enthaltenden Chloroprenlatex und Substanzen, die im Brandfall ein parakristallines Kohlenstoffgerüst bilden, enthalten, sowie ein Verfahren zu ihrer Herstellung.

Thermisch expandierbare Brandschutzmassen, die aus Blähgraphit, Chloroprenkautschuk, einem Phenolharz, einem organischen Lösungsmittel, sowie gegebenenfalls zusätzlich aus Aluminiumhydroxid und anorganischen Fasern bestehen, sind beispielsweise in der AT-PS 360.130 beschrieben. Sie erweisen sich im vorbeugenden Brandschutz vor allem auf Grund ihrer ausgezeichneten Beständigkeit gegen Feuchtigkeit, Frost, Wärme, Licht und Industrieklima, sowie auf Grund ihres hohen Blähdruckes als besonders wirkungsvoll. Bei Einwirkung von Hitze und Feuer expandieren sie im Brandfall in der zu schützenden Öffnung bei verhältnismäßig geringer Fließfähigkeit. Die expandierende Masse weicht dadurch auch in einer nicht gänzlich abgeschlossenen Öffnung Hindernissen nicht aus, und bildet auf Grund ihres hohen Bläh- oder Expansionsdruckes, der üblicherweise über 2 bar liegt, eine fest abdichtende Sperrschicht, wodurch eine weitere Ausbreitung von Hitze, Feuer und Rauchgasen vermindert oder verzögert bzw. gänzlich verhindert wird. Dieses Dichtungsmaterial besitzt auch im expandierten Zustand eine hohe mechanische Festigkeit. Nachteilig bei der Herstellung, Verarbeitung und Anwendung derartiger Massen ist jedoch ihre Sprödigkeit und geringe Flexibilität. Ein weiterer Nachteil liegt darin, daß bei ihrer Herstellung organische Lösungsmittel verwendet werden, die erhöhten apparativen Aufwand und erhöhten Arbeitsaufwand zur Lösungsmittelrückgewinnung und zur Minimierung einer eventuell durch Lösungsmittel bedingten Umweltbelastung und Gesundheitsgefährdung erfordern.

Die Verwendung von lösungsmittelfreien Brandschutzmassen aus Blähgraphit und einem polymeren Bindemittel ist in WO 88/02019 beschrieben. Als polymeres Bindemittel ist entweder ein flexibles Bindemittel, z. B. Polyvinylacetat, ein elastomeres Bindemittel, z. B. ein Chloroprenpolymer, ein duromeres Bindemittel, z. B. ein Formaldehydharz oder ein duromeres Bindemittel mit einem Zusatz eines flexiblen Bindemittels möglich. Der Nachteil dieser Brandschutzmassen liegt jedoch darin, daß sie im Falle der Verwendung von flexiblen oder elastomeren Bindemitteln zwar eine ausreichende Flexibilität, die für eine leichte Handhabung notwendig ist, besitzen, daß jedoch die nach dem Aufblähen im Brandfall gebildete Sperrschicht eine zu geringe Stabilität und Härte aufweist, die für eine optimale Abdichtung gegen eine weitere Brandausbreitung notwendig sind. Brandschutzmassen auf Basis von duromeren Bindemitteln lassen sich wegen ihrer großen Härte nur sehr schwierig verarbeiten, die im Brandfall nach dem Aufblähen gebildete Kruste ist zwar hart, jedoch auch rissig und spröd und bildet keine ausreichend stabile und dichte Sperrschicht.

Die Aufgabe der Erfindung lag darin, diese bei den bekannten Brandschutzmassen auftretenden Nachteile auszuschalten, und vor allem weniger spröde Massen zu erhalten, die im Brandfall eine ausreichend stabile und harte Sperrschicht bilden, und bei deren Herstellung keine organischen Lösungsmittel erforderlich sind. Die Aufgabe konnte mit einer Brandschutzmasse gelöst werden, die durch Kombination von drei bestimmten Komponenten erhalten wurde.

Gegenstand der vorliegenden Erfindung ist demnach eine thermisch expandierbare Brandschutzmasse, die dadurch gekennzeichnet ist, daß sie Blähgraphit, einen Chloroprenlatex mit mindestens 0,3 Molen Carboxylgruppen pro 1 kg Latexfeststoff, im Brandfall ein parakristallines Kohlenstoffgerüst bildende Substanzen, sowie gegebenenfalls weitere Zusatzstoffe enthält.

Dabei erweist es sich als besonders vorteilhaft, wenn die Brandschutzmassen keine organischen Lösungsmittel enthalten, sondern wenn bei der Herstellung wäßrige Latexdispersionen verwendet werden. Auf Grund des vorhandenen Restwassergehaltes zeigen diese Brandschutzmassen ein günstigeres Brandverhalten als bei Verwendung von organischen Lösungsmitteln. Wegen der Abwesenheit von organischen Lösungsmitteln können sie wesentlich einfacher und wesentlich umweltfreundlicher hergestellt und verarbeitet werden. Die erfindungsgemäßen Brandschutzmassen zeigen vor allem aufgrund des Gehaltes an elastomerem Chloroprenpolymer gute Elastizität und Flexibilität, sodaß sie bzw. aus ihnen hergestellte Laminate oder Platten leicht anwendbar, verarbeitbar und handhabbar sind. Abhängig von der jeweiligen Zusammensetzung der Brandschutzmasse können im Brandfall sehr hohe Blähdrücke, vorzugsweise über 5 bar, und damit eine besonders wirkungsvolle Abdichtung erzielt werden. Die nach dem Aufblähen gebildete Sperrschicht zeichnet sich durch ihre Festigkeit, Härte und Stabilität aus, sodaß sie durch die thermischen, mechanischen und aerodynamischen Beanspruchungen sowie Feuerturbulenzen im Brandfall keine Risse bildet und nicht zerstört wird.

Der verwendete Blähgraphit kann beispielsweise durch Säurebehandlung eines Naturgraphits mit rauchender Salpetersäure, wie in US 3,574,644 oder bei H. Spatzek, Carbon 86 (1986) beschrieben, hergestellt werden.

Der Chloroprenlatex wird üblicherweise durch Copolymerisation von Chloropren mit Acrylsäure oder Methacrylsäure hergestellt. Solche Latices sind beispielsweise als Skyprene[(R)] (Toyo Soda), Bayprene[(R)] (Bayer), Butaclor[(R)] (Distugil), Denka Chloroprene[(R)] (Druki Kagaku Kogyo), Nairit[(R)] (UdSSR) oder Neoprene[(R)]

(Du Pont) im Handel.

Die Brandschutzmasse enthält üblicherweise 25 bis 60 Gew.% Blähgraphit, 5 bis 25 Gew.%, berechnet als Feststoff, eines Chloroprenlatex, 5 bis 25 Gew.% Substanzen, die im Brandfall ein parakristallines Kohlenstoffgerüst bilden, sowie gegebenenfalls Zusatzstoffe.

Geeignete Substanzen, die im Brandfall ein parakristallines Kohlenstoffgerüst bilden, sind beispielsweise Polyacrylnitril, Cellulose oder deren Derivate, Phenol-Formaldehydharze, Polyfurfurylalkohol oder Polyimide. Bei der Erwärmung im Brandfall vernetzen diese Substanzen zunächst, wobei die starken intermolekularen Bindungen auch bei der weiteren thermischen Belastung, die zur pyrolytischen Zersetzung und schließlich zur Bildung des parakristallinen Kohlenstoffgerüstes führt, erhalten bleiben. (Chemie-Ing.-Techn. 42 Nr. 9/10 (1970), S. 659-669). Dreidimensional vernetzte Duromere, wie beispielsweise Phenolharze, erweisen sich dabei als besonders geeignet. Phenolharze mit tertiären Butylgruppen, wie z. B. p-tert-Butylphenolformaldehydharz 7520E oder 7522E von Fa. Rousselot, zeigen besonders gute Resultate.

Zusatzstoffe, die das Brandverhalten modifizieren, sind beispielsweise Melamin und seine Derivate, verschiedene Graphitsalze, Cyanursäurederivate, Dicyandiamid, Halogenkohlenwasserstoffe, Polyammoniumphosphate und Guanidinsalze. Diese Substanzen blähen bei Hitzeeinwirkung ebenfalls unter Zersetzung auf. Da sie eine von Blähgraphit verschiedene Zersetzungstemperatur aufweisen, erhöht sich im Brandfall mit der steigenden Temperatur auch der Blähdruck, wodurch eine festere Abschottung der Öffnung erfolgt.

Außerdem können weitere Zusatzstoffe, die vor allem die Festigkeit der Dichtungsmasse im expandierten Zustand verbessern, die Kruste verfestigen und den Zusammenhalt erhöhen, wie z. B. anorganische Fasern, beispielsweise Mineral- oder Glasfasern, Glaspulver, Vermiculite, Bentonite, Kieselsäure, Silikate, Borax, Stärke, Zucker, Chlorparaffine, Aluminiumsulfat, Aluminiumhydroxid oder Magnesiumhydroxid mitverwendet werden. Weiters können Flammschutzmittel zugesetzt werden, beispielsweise halogenierte oder phosphorhältige Kohlenwasserstoffe, wie z. B. Tris-chlorpropylphosphat, Dibromneopentylglykol, oder Antimontrioxid. Weiters kommen auch solche Zusatzstoffe in Betracht, die die Schaumbildung im Falle der Beflammung steigern helfen. Solche sind beispielsweise Salicylsäure, p-Hydroxybenzoesäure, PVC, sowie Stickstoff- oder Sulfohydrazide, Triazole, Harnstoffdicarbonsäureanhydrid und Ammoniumcarbonat.

Die erfindungsgemäße Brandschutzmasse kann sowohl als Paste, als auch in Form von Platten, Leisten, Bändern oder Formkörpern verwendet werden. Besonders vorteilhaft und einfach in der Anwendung sind Brandschutzlaminate, bei denen die Brandschutzmasse auf eine Trägerbahn, beispielsweise ein Glasfaservlies, aufkaschiert ist. Aus dekorativen Gründen oder beispielsweise zum Schutz der Brandschutzmasse können die Laminate oder Platten mit einer Deckschicht, beispielsweise einer Plastikfolie, z. B. einer PVC-Folie, Papier oder Aluminiumblech, ein- oder beidseitig abgedeckt sein. Es ist auch möglich die Brandschutzlaminate oder -platten mit einer Klebschicht auszurüsten, die dann vorteilhafterweise mit einer Trennfolie abgedeckt wird.

Die Herstellung der erfindungsgemäßen Brandschutzmassen erfolgt durch Mischen und Homogenisieren von Blähgraphit, einer Carboxylgruppen enthaltenden, vorzugsweise wäßrigen Latexdispersion, einer im Brandfall ein parakristallines Kohlenstoffgerüst bildenden Substanz, z. B. eines Phenol-Formaldehydharzes oder Polyimidharzes, sowie gegebenenfalls weiterer das Brandverhalten modifizierender Zusatzstoffe, beispielsweise in einem Kneter, Dissolver oder Mischer. Die dabei erhaltene Masse kann entweder als solche verwendet werden, oder sie kann auf eine Trägerbahn, beispielsweise auf eine Folie bzw. ein Vlies (z. B. mit Hilfe einer Rakel aufgebracht werden. Nach dem Trocknen kann das Laminat auf einem Kalander, eventuell mit Prägewalze komprimiert werden, eventuell unter gleichzeitiger Kaschierung mit einer Deckschicht, beispielsweise aus PVC oder Aluminium.

Die erfindungsgemäßen Brandschutzmassen werden zur brandschützenden Abdichtung bzw. Abschottung von Öffnungen in einen Brandabschnitt bildenden Bauteilen, wie z. B. Fugen zwischen Mauern, Hohl- bzw. Zwischenräumen, Mauerdurchbrüchen, Kabeldurchführungen oder dergleichen verwendet. Ebenso können Türdichtungen, Fensterdichtungen oder andere Dichtungen, die im Brandfall aufschäumen und den vorgelagerten Schlitz oder die Öffnung abdichten, hergestellt werden. Die Verbindung zwischen Glas und Rahmen bei Brandschutzverglasungen mit Hilfe der erfindungsgemäßen Brandschutzmassen oder -laminate ergibt ebenfalls einen optimalen Brandschutz. Auch die Fertigung ganzer Ziegel ist möglich, mit denen Durchbrüche für Kabel oder Rohre ausgekleidet werden, und die bei Feuereinwirkung eine Sperre bilden. Im Brandfall schäumen diese Massen durch die Hitzeeinwirkung auf und dichten die Öffnung ab, sodaß der weitere Durchtritt von Feuer und Rauch und somit die weitere Ausbreitung des Brandes verhindert wird.

Beispiele 1 - 15 und Vergleichsbeispiel 16

In einem Rührbehälter wurden die in Tabelle 1 und 2 angeführten Einsatzstoffe (Angabe in Gew.Teilen) in folgender Reihenfolge zugesetzt: Zusatzstoffe, Al(OH)$_3$, Phenolharz, 50 %ige wäßrige Chloroprenlatexdispersion, Blähgraphit, Mineralfasern (Inorphil[R] 061-60, Fa. G.M. Langer, BRD). Die Masse wurde jeweils während 1 Stunde mittels Dissolver mit Zahnscheibe bei 30°C und einem pH-Wert von 10 (eingestellt mittels KOH) homogenisiert. Die Viskosität lag bei etwa 4 Pas, gemessen bei 30°C im Brookfieldviskosimeter (Spindel 7, 20 Upm). Die erhaltene Brandschutzmasse wurde anschließend auf ein Glasvlies mit einem Flächengewicht von 50 g/m$^2$ aufgerakelt und bei 190°C getrocknet.

Der Blähgraphit wurde durch Säurebehandlung eines Naturgraphits mit rauchender Salpetersäure erhalten. Als Phenolharz wurde ein tert-Butylphenol-Formaldehydharz, Type 7520E von Fa. Rousselot, Frankreich, verwendet.

Es wurden im Handel erhältliche Latexdispersionen auf Basis eines Copolymerisats von Chloropren und Methacrylsäure verwendet. Der jeweils in Tabelle 1 und 2 angegebene Gehalt an Carboxylgruppen wurde durch Mischen der folgenden Latices mit unterschiedlichem Carboxylgruppengehalt eingestellt: Neoprene[R]115 (Du Pont): 0,33 Mol COOH pro 1 kg Latexfeststoff, Neoprene[R]750 und Neoprene[R]824A: kein COOH-Gehalt, Bayprene[R]4R (Bayer): 0,23 Mol COOH pro 1 kg Latexfeststoff. Im Vergleichsbeispiel V 16 wurde bei sonst gleichen Bedingungen an Stelle der wäßrigen Latexdispersion eine 10 %ige Chloroprenlösung in Toluol verwendet.

Die Eigenschaften der Brandschutzlaminate sind ebenfalls in Tabelle 1 und 2 angeführt. Der Blähdruck wurde an Proben mit einem Durchmesser von 113 mm, die zwischen zwei beheizbare Metallplatten eingelegt wurden, bei 250°C gemessen. Der beim Aufblähen entstandene Druck wurde von der unteren Platte auf einen Kraftaufnehmer mit Druckanzeige übertragen. Das aufblähende Material war dabei seitlich nicht abgegrenzt und konnte sich in der Ebene ungehindert ausbreiten. Die Blähhöhe wurde an Proben mit einem Durchmesser von 50 mm, die in einem Metallzylinder von 100 mm Höhe und einem Innendurchmesser von 50 mm eingelegt wurden, gemessen. Der Zylinder mit der Probe, die über einen Stempel mit 100 g vorbelastet war, wurde 10 Minuten in einem Ofen bei 300°C erhitzt.

Tabelle 1

(Einsatzstoffe in Gew.Teilen)

| Beispiel | 1 | 2 | 3 | 4 | 5 | 6 | 7 | 8 |
|---|---|---|---|---|---|---|---|---|
| Mol Carboxyl pro 1 kg Latex-feststoff | 0,33 | 0,33 | 0,05 | 0,33 | 0,05 | 0,33 | 0,33 | 0,33 |
| Latex | 21 | 30 | 30 | 27 | 21 | 27 | 27 | 27 |
| Phenolharz | 3 | 4 | 4 | 4 | 10 | 10 | 4 | 12 |
| Inorphil(R) | - | 2 | 2 | - | 2,1 | - | - | - |
| Blähgraphit | 57 | 53 | 53 | 57 | 57 | 48 | 57 | 57 |
| Al(OH)$_3$ | - | 11 | - | - | 9,9 | - | - | 4 |
| Zusatzstoffe[3] | 19/A | - | 11/B | 12/B | - | 12/B | 12/C | - |

| Eigenschaften | | | | | | | | |
|---|---|---|---|---|---|---|---|---|
| ungebläht[1] | + | + | - | + | - | + | + | + |
| gebläht[2] | + | + | - | + | - | + | + | + |
| Dicke (mm) | 2,4 | 2,5 | 2,8 | 2,5 | 2,5 | 2,4 | 2,6 | 2,2 |
| Flächengewicht (kg/m²) | 2,56 | 2,02 | 2,16 | 2,50 | 2,50 | 2,43 | 2,47 | 2,05 |
| Blähdruck (bar) | 12,5 | 6,8 | 7 | 8 | 6 | 8,5 | 9,6 | 8,7 |
| Blähhöhe (mm) | 19 | 17 | 20 | 20 | 13 | 15 | 13 | 17 |

[1] + flexibel, - spröd

[2] + stabil und hart, - instabil

[3]   A Aluminiumsulfat

     B Dicyandiamid

     C Melamin

Tabelle 2

(Einsatzstoffe in Gew.Teilen)

| Beispiel | 9 | 10 | 11 | 12 | 13 | 14 | 15 | V16 |
|---|---|---|---|---|---|---|---|---|
| Mol Carboxyl pro 1 kg Latexfeststoff | 0,33 | 0,17 | 0 | 0,23 | 0,33 | 0,33 | 0,23 | 0 |
| Latex | 27 | 27 | 27 | 27 | 25 | 40 | 22 | 55(Toluol) |
| Phenolharz | 4 | 4 | 4 | 4 | 6 | 7 | 6,5 | 5 |
| Inorphil(R) | - | - | - | - | 1,4 | - | 1,5 | 1,3 |
| Blähgraphit | 57 | 57 | 57 | 57 | 54,6 | 37 | 42 | 29,3 |
| $Al(OH)_3$ | - | - | - | - | 13 | 5 | 14 | 9,4 |
| Zusatzstoffe[3] | 12/D | 12/E | 12/F | 12/G | - | 11/H | 14/H | - |

Eigenschaften

| | 9 | 10 | 11 | 12 | 13 | 14 | 15 | V16 |
|---|---|---|---|---|---|---|---|---|
| ungebläht[1] | + | - | - | - | + | + | - | +/- |
| gebläht[2] | + | - | - | - | + | + | - | + |
| Dicke(mm) | 2,3 | 2,5 | 2,2 | 2,2 | 2,5 | 2,6 | 2,5 | 2,5 |
| Flächengewicht $(kg/m^2)$ | 2,79 | 3,53 | 2,47 | 1,84 | 3,6 | 2,8 | 3,0 | 2,5 |
| Blähdruck (bar) | 12 | 13 | 8,6 | 8,8 | 13 | 10 | 8 | 3 |
| Blähhöhe (mm) | 12 | 19 | 13 | 17,5 | 19 | 17 | 12 | 18 |

[1] + flexibel, - spröd, +/- wenig flexibel

[2] + stabil und hart, - instabil

[3] D Stärke

E Borax

F Guanylharnstoffsulfat

G Guanidinphosphat

H Guanidincarbonat

Beispiel 17:

Kleinbrandversuch mit Laminaten gemäß Beispiel 13 und V 16

Um die im Brandfall wirksame Abdichtung einer Öffnung mit der erfindungsgemäßen Brandschutzmasse nachzuweisen, wurden zwei 20 cm lange PVC-Rohre mit einem Außendurchmesser von 16 cm und einer Wandstärke von 3,5 mm mit je 230 g eines 15 cm breiten Brandschutzlaminates gemäß Beispiel 13, das vliesseitig zusätzlich mit einer 0,05 mm dicken Aluminiumfolie kaschiert war, umwickelt, wobei der Blähgraphit rohrseitig zu liegen kam. Die umwickelten Rohre wurden in je einer Zinkblechmanschette verpackt und in je eine Bohrung (22 cm Durchmesser) einer 10 cm dicken Leichtbetonplatte (Ytong(R)) eingeschoben. Die Rohre ragten an beiden Seiten der Platte 5 cm aus der Bohrung heraus.

In zwei weitere, gleichartige Bohrungen der Leichtbetonplatte wurden zwei analog umwickelte Rohre eingeschoben, wobei jedoch an Stelle des erfindungsgemäßen Brandschutzlaminates ein Brandschutzlaminat gemäß Vergleichsbeispiel V 16 verwendet wurde. Das etwas weniger flexible Laminat zeigte beim Wickeln kleine Risse und leichte Bruchstellen.

Anschließend wurde die Leichtbetonplatte in Anlehnung an DIN 4102 in eine Kleinbrandkammer eingebaut, und nach der Einheitstemperaturkurve von einer Seite her bis zu einer Temperatur von etwa 1000°C beflammt. Die Brandschutzmassen begannen durch die Hitze nach ca. 4 Minuten aufzublähen, wobei alle 4 PVC-Rohre erweicht und zusammengedrückt wurden. Die Abschottungen mit den Laminaten gemäß Beispiel 13 waren nach 13 bzw. 14 Minuten, jene mit den Laminaten gemäß Vergleichsbeispiel V 16 nach 13 bzw. 17 Minuten vollständig verschlossen, sodaß keine Rauchgase, Feuer oder Ruß mehr nach außen drangen. Nach 40 Minuten begannen die nach außen ragenden Rohrstümpfe der erfindungsgemäßen Abschottung auseinanderzubrechen, während die Rohrstümpfe der Abschottungen gemäß Vergleichsbeispiel abzuschmelzen begannen. Nach 60 Minuten waren die Rohrstümpfe ganz abgebrochen bzw. abgeschmolzen, die Temperatur des Blähschaums gemäß Beispiel 13 lag bei 290°C, jene des Blähschaums gemäß Vergleichsbeispiel V 16 bei 310 bzw. 370°C.

Nach 80 Minuten wurde der Versuch abgebrochen, ohne daß Flammen- oder Rauchgasdurchbrüche feststellbar waren. Es zeigte sich ferner, daß bei Verwendung der Brandschutzmasse gemäß Beispiel 13 auf der dem Feuer abgewandten Seite im Verlaufe des Brandversuches eine um 20 - 80°C niedrigere Temperatur herrschte als bei Verwendung der herkömmlichen Brandschutzmasse gemäß Vergleichsbeispiel V 16.

Die Härte des Blähschaumes gemäß Beispiel 13 wurde nach dem Erkalten mittels Druckfestigkeitsprüfung auf einem Zwickgerät 4045 gemäß DIN 53421 gemessen und lag bei 0,2 N/mm$^2$ (60 % Stauchung).

## Patentansprüche

### Patentansprüche für folgende Vertragsstaaten: AT, BE, CH, DE, FR, GB, GR, IT, LI, LU, NL, SE

1. Thermisch expandierbare Brandschutzmasse, dadurch gekennzeichnet, daß sie Blähgraphit, einen Chloroprenlatex mit mindestens 0,3 Molen Carboxylgruppen pro 1 kg Latexfeststoff, im Brandfall ein parakristallines Kohlenstoffgerüst bildende Substanzen, sowie gegebenenfalls weitere Zusatzstoffe enthält.

2. Brandschutzmasse gemäß Anspruch 1, dadurch gekennzeichnet daß zu ihrer Herstellung eine wäßrige Latexdispersion verwendet wurde und daß sie kein organisches Lösungsmittel enthält.

3. Brandschutzmasse gemäß Anspruch 1 oder 2, dadurch gekennzeichnet, daß der Chloroprenlatex aus einem Copolymerisat von im wesentlichen Chloropren und Acrylsäure oder Methacrylsäure aufgebaut ist.

4. Brandschutzmasse gemäß einem der Ansprüche 1 bis 3, dadurch gekennzeichnet, daß die im Brandfall ein parakristallines Kohlenstoffgerüst bildende Substanz ein Phenolharz ist.

5. Brandschutzmasse gemäß einem der Ansprüche 1 bis 4, dadurch gekennzeichnet, daß sie 25 bis 60 Gew.% Blähgraphit, 5 bis 25 Gew.% eines Chloroprenlatex, als Feststoff berechnet, und 5 bis 25 Gew.% im Brandfall ein parakristallines Kohlenstoffgerüst bildende Substanzen enthält.

6. Brandschutzlaminat, dadurch gekennzeichnet, daß eine Brandschutzmasse gemäß einem der Ansprüche 1 bis 5 auf einer Trägerbahn aufgebracht ist.

7. Brandschutzlaminat gemäß Anspruch 6, dadurch gekennzeichnet, daß die Brandschutzmasse mit einer Deckschicht abgedeckt ist.

8. Verfahren zur Herstellung einer Brandschutzmasse bzw. eines Brandschutzlaminates gemäß einem der Ansprüche 1 - 7, dadurch gekennzeichnet, daß man Blähgraphit, eine Carboxylgruppen enthaltende, vorzugsweise wäßrige Latexdispersion, eine im Brandfall ein parakristallines Kohlenstoffgerüst bildende Substanz, sowie gegebenenfalls weitere Zusatzstoffe unter guter Homogenisierung miteinander vermischt, die erhaltene Masse gegebenenfalls auf eine Trägerbahn aufbringt und das dabei gebildete Laminat gegebenenfalls mit einer Deckschicht kaschiert.

### Patentansprüche für folgenden Vertragstaat: ES

1. Verfahren zur Herstellung einer thermisch expandierbaren Brandschutzmasse, dadurch gekennzeichnet, daß man Blähgraphit, einen Chloroprenlatex mit mindestens 0,3 Molen Carboxylgruppen pro 1 kg Latexfeststoff, im Brandfall ein parakristallines Kohlenstoffgerüst bildende Substanzen, sowie gegebenenfalls weitere Zusatzstoffe miteinander vermischt und homogenisiert.

2. Verfahren gemäß Anspruch 1, dadurch gekennzeichnet, daß eine wäßrige Latexdispersion verwendet wird.

3. Verfahren gemäß Anspruch 1 oder 2, dadurch gekennzeichnet, daß der Chloroprenlatex aus einem Copolymerisat von im wesentlichen Chloropren und Acrylsäure oder Methacrylsäure aufgebaut ist.

4. Verfahren gemäß einem der Ansprüche 1 bis 3, dadurch gekennzeichnet, daß die im Brandfall ein parakristallines Kohlenstoffgerüst bildende Substanz ein Phenolharz ist.

5. Verfahren gemäß einem der Ansprüche 1 bis 4, dadurch gekennzeichnet, daß 25 bis 60 Gew.% Blähgraphit, 5 bis 25 Gew.% eines Chloroprenlatex, als Feststoff berechnet, und 5 bis 25 Gew.% im Brandfall ein parakristallines Kohlenstoffgerüst bildende Substanzen eingesetzt werden.

6. Verfahren zur Herstellung eines Brandschutzlaminates, dadurch gekennzeichnet, daß man Blähgraphit, eine 0,3 Mol Carboxylgruppen pro 1 kg Latexfeststoff enthaltende, vorzugsweise wäßrige Latexdispersion, eine im Brandfall ein parakristallines Kohlenstoffgerüst bildende Substanz, sowie gegebenenfalls weitere Zusatzstoffe unter guter Homogenisierung miteinander vermischt, die erhaltene Masse auf eine Trägerbahn aufbringt und das dabei gebildete Laminat gegebenenfalls mit einer Deckschicht kaschiert.

## Claims

### Claims for the following Contracting States: AT, BE, CH, DE, FR, GB, GR, IT, LI, LU, NL, SE

1. A thermally expandable fireproofing composition, characterized in that it contains expandable graphite, a chloroprene latex containing at least 0.3 mole of carboxyl groups per 1 kg of latex solids, and substances which in the event of a fire form a paracrystalline carbon structure, with or without further additives.

2. A fireproofing composition according to Claim 1, characterized in that it was prepared using an aqueous latex dispersion and that it contains no organic solvent.

3. A fireproofing composition according to Claim 1 or 2, characterized in that the chloroprene latex is composed of a copolymer of essentially chloroprene and acrylic or methacrylic acid.

4. A fireproofing composition according to any one of Claims 1 to 3, characterized in that the substance which in the event of a fire forms a paracrystalline carbon structure is a phenolic resin.

5. A fireproofing composition according to any one of Claims 1 to 4, characterized in that it contains from 25 to 60% by weight of expandable graphite, from 5 to 25% by weight of a chloroprene latex, calculated as solids, and from 5 to 25% by weight of substances which form a paracrystalline carbon structure in the event of a fire.

6. A fireproofing laminate, characterized in that a fireproofing composition according to any one of Claims 1 to 5 has been applied to a support sheet.

7. A fireproofing laminate according to Claim 6, characterized in that the fireproofing composition has been covered with a cover sheet.

8. A method for producing a fireproofing composition or laminate according to any one of Claims 1 - 7, characterized in that expandable graphite, a carboxyl-containing, preferably aqueous latex dispersion, a substance which in the event of a fire forms a paracrystalline carbon structure, are mixed with one another with or without further additives and thoroughly homogenized, and optionally the resulting composition is applied to a support sheet to form a laminate, which may be laminated with a cover sheet.

### Claims for the following Contracting States: ES

1. A method for producing a thermally expandable fireproofing composition, characterized in that expandable graphite, a chloroprene latex containing at least 0.3 mole of carboxyl groups per 1 kg of latex solids, and substances which in the event of a fire form a paracrystalline carbon structure, with or without further additives, are mixed with one another and homogenized.

2. A method according to Claim 1, characterized in that an aqueous latex dispersion is used.

3. A method according to Claim 1 or 2, characterized in that the chloroprene latex is composed of a copolymer of essentially chloroprene and acrylic or methacrylic acid.

4. A method according to any one of Claims 1 to 3, characterized in that the substance which in the event of a fire forms a paracrystalline carbon structure is a phenolic resin.

5. A method according to any one of Claims 1 to 4, characterized in that it contains from 25 to 60% by weight of expandable graphite, from 5 to 25% by weight of a chloroprene latex, calculated as solids, and from 5 to 25% by weight of substances which form a paracrystalline carbon structure in the event of a fire.

6. A method for producing a fireproofing laminate, characterized in that expandable graphite, a preferably aqueous latex dispersion containing 0.3 mol of carboxyl groups per 1 kg of latex solids, a substance which in the event of a fire forms a paracrystalline carbon structure, are mixed with one another with or without further additives and thoroughly homogenized, and the resulting composition is applied to a support sheet to form a laminate, which may be laminated with a cover sheet.


**Revendications**

**Revendications pour les Etats contractants suivants: AT, BE, CH, DE, FR, GB, GR, IT, LI, LU, NL, SE**

1. Masse ignifugeante pouvant gonfler thermiquement, caractérisée en ce qu'elle contient du graphite expansé, un latex de chloroprène comportant au moins 0,3 mole de groupes carboxyle par kg de substances solides de latex, des substances formant un squelette carboné paracristallin en cas d'incendie, ainsi qu'éventuellement d'autres adjuvants.

2. Masse ignifugeante selon la revendication 1, caractérisée en ce qu'on utilise, pour la préparer, une solution aqueuse de latex, et qu'elle ne contient aucun solvant organique.

3. Masse ignifugeante selon la revendication 1 ou 2, caractérisée en ce que le latex de chloroprène est composé d'un copolymère essentiellement formé de chloroprène et d'acide acrylique ou d'acide méthacrylique.

4. Masse ignifugeante selon l'une des revendications 1 à 3, caractérisée en ce que la substance formant un squelette carboné paracristallin en cas d'incendie est une résine phénolique.

5. Masse ignifugeante selon l'une des revendications 1 à 4, caractérisée en ce qu'elle contient 25 à 60 % en poids de graphite expansé, 5 à 25 % en poids d'un latex de chloroprène, calculés en tant que substances solides, et 5 à 25 % en poids de substances formant un squelette carboné paracristallin en cas d'incendie.

6. Stratifié ignifugeant, caractérisé en ce qu'une masse ignifugeante selon l'une des revendications 1 à 5 est appliquée sur un support.

7. Stratifié ignifugeant selon la revendication 6, caractérisé en ce que la masse ignifugeante est recouverte d'une couche de revêtement.

8. Procédé de préparation d'une masse ignifugeante ou d'un stratifié ignifugeant selon l'une des revendications 1 à 7, caractérisé en ce qu'on mélange du graphite expansé, une dispersion de latex contenant des groupes carboxyle, de préférence aqueuse, une substance formant un squelette carboné paracristallin en cas d'incendie, ainsi qu'éventuellement d'autres additifs, en les homogénéisant bien, on applique la masse obtenue éventuellement sur un support et on recouvre éventuellement le stratifié formé avec une couche de revêtement.

**Revendications pour l'Etat contractant suivant: ES**

1. Procédé de préparation d'une masse ignifugeante pouvant gonfler thermiquement, caractérisé en ce qu'on mélange et homogénéise du graphite expansé, un latex de chloroprène comportant au moins 0,3 mole de groupes carboxyle par kg de substances solides de latex, des substances formant un squelette carboné paracristallin en cas d'incendie, ainsi qu'éventuellement d'autres adjuvants.

2. Procédé selon la revendication 1, caractérisé en ce qu'on utilise une solution aqueuse de latex.

3. Procédé selon la revendication 1 ou 2, caractérisé en ce que le latex de chloroprène est composé d'un copolymère formé essentiellement de chloroprène et d'acide acrylique ou d'acide méthacrylique.

4. Procédé selon l'une des revendications 1 à 3, caractérisé en ce que la substance formant un squelette carboné paracristallin en cas d'incendie est une résine phénolique.

5. Procédé selon l'une des revendications 1 à 4, caractérisé en ce qu'on utilise 25 à 60 % en poids de graphite expansé, 5 à 25 % en poids d'un latex de chloroprène, calculés en tant que substances solides, et 5 à 25 % en poids de substances formant un squelette carboné paracristallin en cas d'incendie.

6. Procédé de préparation d'un stratifié ignifugeant, caractérisé en ce qu'on mélange du graphite expansé, une dispersion de latex, de préférence aqueuse, contenant 0,3 mole de groupes carboxyle par kg de substances solides de latex, une substance formant un squelette carboné paracristallin en cas d'incendie, ainsi qu'éventuellement d'autres adjuvants, tout en les homogénéisant bien, on applique la masse obtenue sur un support et éventuellement on recouvre le stratifié ainsi formé d'une couche de revêtement.